(19)

Europäisches Patentamt

European Patent Office

Office européen des brevets

(11) **EP 2 905 729 A1**

(12) **EUROPEAN PATENT APPLICATION**

(43) Date of publication:
12.08.2015 Bulletin 2015/33

(51) Int Cl.:
*G06Q 10/06* (2012.01)

(21) Application number: 15154053.1

(22) Date of filing: 06.02.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 06.02.2014 IN MU00422014

(71) Applicant: **Tata Consultancy Services Limited Mumbai 400 021 (IN)**

(72) Inventors:
• **Karande, Shirish Subhash**
 **411013 Pune (IN)**

• **Srinivasan, Iyengar Venkatachary**
 **411013 Pune (IN)**
• **Lodha, Sachin P.**
 **411013 Pune (IN)**
• **Sriraman, Anand**
 **411013 Pune (IN)**
• **Kalra, Kanika**
 **411013 Pune (IN)**
• **Kumar, Rahul**
 **411013 Pune (IN)**

(74) Representative: **Heinze, Ekkehard Meissner, Bolte & Partner GbR Widenmayerstrasse 47 80538 München (DE)**

(54) **System and method for providing crowd sourcing platform for task allocation**

(57) The present subject matter discloses a system and a method for allocating task on crowdsourcing platform. A task may be received from a first user on the platform. Further, a protocol may be configured by the first user indicating one or more task actions to be performed for completing the task. Further, a hierarchy comprising a plurality of micro-tasks associated with the task may be created. Based on the protocol configured, the system may assign a task action to each of the plurality of micro-tasks. Further, the system may allocate each of the plurality of micro-tasks to a second user based on the task action assigned and a set of parameters. The set of parameters may comprise second user's metadata, completion time associated with each micro-task, size of each micro-task, and form factor of an interface accessed by the second user.

Figure 3

**Description**

CROSS-REFERENCE TO RELATED APPLICATIONS AND PRIORITY

The present application claims priority to Indian Provisional Patent Application No. 42/MUM/2014, filed on February 06th, 2014, the entirety of which is hereby incorporated by reference.

TECHNICAL FIELD

The present subject matter described herein, in general, relates to a method and a system for providing a crowd sourcing platform for task allocation.

BACKGROUND

Language translations crowd sourcing initiatives are known in art. For translating the languages, especially human languages a number of tools are available and used. These tools generally provide an on online learning environment to enable users or learners to learn different languages from a common platform. In the crowd sourcing, online members are invited for translating a given content in specified language and also vote for the translations. The online learning platforms in a crowd sourcing environment plays an important role for learners, more particularly for language learners.

At one hand, these learning platforms allow the learners or users to upload the content or even a uniform resource locator (URL) address of a particular website which the learner want to be translated in his/her preferred language. At another hand, the learning platforms invite the online members (also called as workers or translators) for translating the content in the specified language preferred by the learner. But, before inviting the online members, evaluating the credibility of the online members is required. Along with the credibility, analyzing the other factors like complexity of the content to be translated, size of the content, and types of device used by the online members is another concern. Further, during the translation process, the tools are restricted to use previously stored translation algorithms which are already in-built with the tools. In some cases, the translation algorithms in-built with the tools may not be attuned with the language of the content which is to be translated. Due to such restrictive nature, the tools results in a wrong or incomplete translation of the content. Apart from limited scope of translations algorithms, the tools may also get restricted with their pre-stored translation protocols which may be stored in their memory. Since, the translation protocols may vary from one translation to another, the tools are again likely to translate the content wrongly.

SUMMARY

This summary is provided to introduce aspects related to systems and methods for providing crowd sourcing platform for task allocation and the concepts are further described below in the detailed description. This summary is not intended to identify essential features of subject matter nor is it intended for use in determining or limiting the scope of the subject matter.

In one implementation, a system for allocating a task on a crowd sourcing platform is disclosed. The system comprises a processor and a memory coupled to the processor. The processor executes a plurality of modules stored in the memory. The plurality of modules comprises a receiving module, a configuring module, a creating module, an assigning module, and an allocating module. The receiving module may receive a task from a first user. Further, the configuring module may enable the first user to configure a protocol. The protocol configured may indicate one or more task actions to be performed for completing the task. Further, the creating module may create a hierarchy comprising a plurality of micro-tasks associated with the task. Further, the assigning module may assign a task action to each of the plurality of micro-tasks based on the protocol configured. Further, the allocating module may allocate each of the plurality of micro-tasks to a second user based on the task action assigned and a set of parameters. The set of parameters may comprise second user's metadata, completion time associated with each micro-task, size of each micro-task, and form factor of an interface accessed by the second user.

In another implementation, a method for allocating a task on a crowd sourcing platform is disclosed. The method may comprise receiving, by a processor, a task from a first user. The method may further comprise enabling, by the processor, the first user to configure a protocol. Further, the protocol configured may indicate one or more task actions to be performed for completing the task. The method may further comprise a step of creating, by the processor, a hierarchy comprising a plurality of micro-tasks associated with the task. Further, the method may comprise a step of assigning, by the processor, a task action to each of the plurality of micro-tasks based on the protocol configured. The method may further comprise a step of allocating, by the processor, each of the plurality of micro-tasks to a second user based on the task action assigned and a set of parameters. Further, the set of parameters may comprise a second user's metadata, completion time associated with each micro-task, size of each micro-task, and form factor of an interface accessed by the second user.

Yet in another implementation a non-transitory computer readable medium embodying a program executable in a computing device for allocating a task on a crowd sourcing platform. The program may comprise a program code for receiving a task from a first user. The program may further comprise a program code for enabling the first user to configure a protocol. The protocol configured may indicate one or more task actions to be performed for completing the task. The program may further comprise a program code for creating a hierarchy comprising a plurality of micro-tasks associated with the task. Further, the program may comprise a program code for assigning a task action to each of the plurality of micro-tasks based on the protocol configured. The program may further comprise a program code for allocating each of the plurality of micro-tasks to a second user based on the task action assigned and a set of parameters. Further, the set of parameters may comprise second user's metadata, completion time associated with each micro-task, size of each micro-task, and form factor of an interface accessed by the second user.

BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to refer like features and components.

Figure 1 illustrates a network implementation of a system for allocating a task on a crowd sourcing platform, in accordance with an embodiment of the present disclosure.

Figure 2 illustrates the system, in accordance with an embodiment of the present disclosure.

Figure 3 illustrates detail working of the system, in accordance with an embodiment of the present disclosure.

Figure 4A-4F illustrates examples of allocating tasks on the crowd sourcing platform, in accordance with an embodiment of the present disclosure

Figure 5 illustrates a method for allocating the task on a crowd sourcing platform, in accordance with an embodiment of the present disclosure.

DETAILED DESCRIPTION

Devices and methods for allocating a task on a crowd sourcing platform are disclosed. In one implementation, the system may enable uploaders (also referred as first user) and translators/workers (also referred as second user) to get registered with the system by providing their personal details. Upon registration, the system may acts as an online platform at which, at one side, the uploaders may upload a task. According to one embodiment, the task may be a translation task (or content to be translated) with a language pair uploaded on the system. After receiving the task from the uploader, the system may further enable the uploader to configure a protocol. The protocol may indicate one or more task actions to be performed for completing the task. While configuring the protocol, the uploader may also choose a consensus algorithm of their choice. Further, the system may also allow the uploaders to plug-in their own consensus algorithm in order to select a model translation for translating the content i.e., the translation task.

Further, the consensus algorithms may be categorized into three categories i.e., protocol dictated, criteria dictated, and hybrid. The protocol dictated type of consensus algorithm may be provided to overcome a scenario in which a simple consensus algorithm may have to stop once the protocol is over. Thus, in a case of machine-human-human translation protocol, the protocol dictated type of consensus algorithm may be declared in such a manner that a consensus is reached once a machine translation has been edited by a human, whose translation is further edited by another human. Further, the criteria dictated type of consensus algorithm may be provided in such a manner that the algorithm may follow the translation protocol till a criterion is met. In this type of category, the consensus algorithm may be repeated if the translation protocol is over without the criteria being met. Further, the criteria to be met may comprise number edits over a last few rounds of a protocol, proximity among candidate translations on the basis of certain distance measure, and other types of statistical measures. In the next category i.e., the hybrid type, the consensus algorithm may be declared when a criteria is met, or a translation protocol has ended, or both the criteria is met and the translation protocol has ended.

Once the task is received and the protocol is configured by the uploader, a hierarchy of plurality of micro-tasks associated with the task may be created by the system. For example, if the task a paragraph which is to be translated from a source language to a target language, the plurality of micro-tasks may be "sentence", and "phrase". Further, a parent-child relationship may be created between the sentence micro-task and its constituent phrase micro-tasks. Further, based on the protocol configured, the system may assign a task action to each of the plurality of micro-tasks. There may be different type of task actions which may be assigned to the plurality of micro-tasks. One of the task actions may be translation task. Further, there may be other task actions in context of the translation, for example, a voting task for a previously translated task and an editing task for the previously translated task. According to the embodiments, there may be yet another type of task actions like a spelling correction task and transliteration task which may be assigned to the plurality of micro-tasks.

Further, based on the task action assigned and a set of parameters, the system may allocate the plurality of micro-tasks to a second user. Further, the set of parameters may comprise second user's metadata, completion time associated with each micro-task, size of each micro-task, and form factor of an interface accessed by the second user. The set of parameters is explained in detail in subsequent paragraphs of the specification. The second user may be a translator or a worker or any user employed/registered with the system for performing the task actions allocated. Further, the system may receive response from the second user corresponding to the micro-task allocated. The response received may be stored in a response table comprising the micro-task, micro-task-id, second user id, a task action id, and the response itself. After the response is received, the uploader or the first user may download the response from the system.

While aspects of described device and method for allocating the task on the crowdsourcing platform may be implemented in any number of different computing devices, environments, and/or configurations, the embodiments are described in the context of the following exemplary devices.

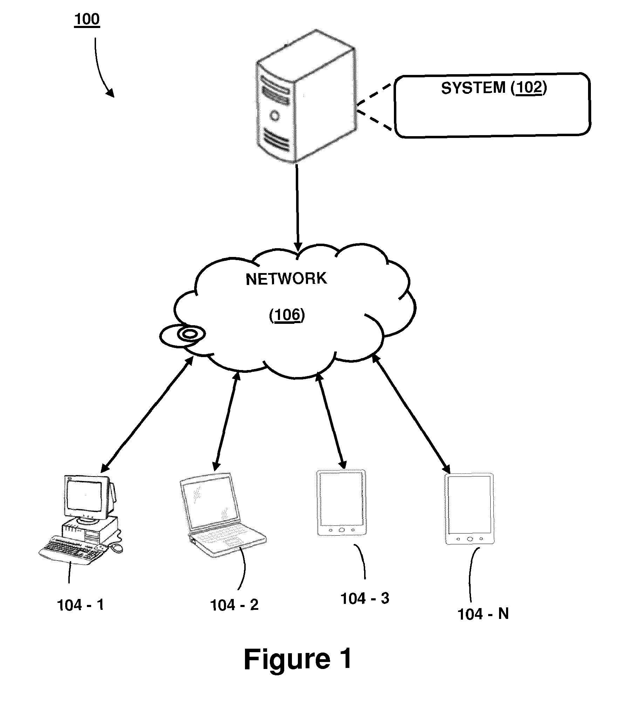

Referring to Figure 1, a network implementation 100 of system 102 for allocating the task is illustrated, in accordance with an embodiment of the present subject matter. In one embodiment, the system 102 facilitates the allocation of the task on the crowd sourcing platform. Although the present subject matter is explained considering that the system 102 is implemented on a server, it may be understood that the system 102 may also be implemented in a variety of computing systems, such as a laptop computer, a desktop computer, a notebook, a workstation, a mainframe computer, a server, a network server, a tablet, a mobile phone, and the like. In one implementation, the system 102 may be implemented in a cloud-based environment. It will be understood that the system 102 may be accessed by multiple users through one or more user devices 104-1, 104-2...104-N, collectively referred to as user 104 hereinafter, or applications residing on the user devices 104. Examples of the user devices 104 may include, but are not limited to, a portable computer, a personal digital assistant, a handheld device, and a workstation. The user devices 104 are communicatively coupled to the system 102 through a network 106.

In one implementation, the network 106 may be a wireless network, a wired network or a combination thereof. The network 106 can be implemented as one of the different types of networks, such as intranet, local area network (LAN), wide area network (WAN), the internet, and the like. The network 106 may either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further the network 106 may include a variety of network devices, including routers, bridges, servers, computing devices, storage devices, and the like.

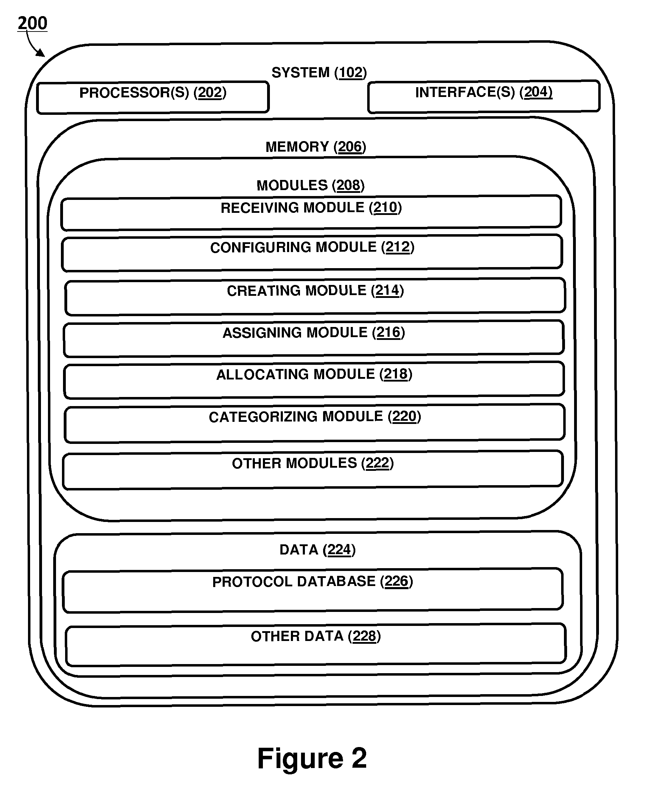

Referring now to Figure 2, the system 102 is illustrated in accordance with an embodiment of the present subject matter. In one embodiment, the system 102 may include at least one processor 202, an input/output (I/O) interface 204, and a memory 206. The at least one processor 202 may be implemented as one or more microprocessors, microcomputers, microcontrollers, digital signal processors, central processing units, state machines, logic circuitries, and/or any devices that manipulate signals based on operational instructions. Among other capabilities, the at least one processor 202 is configured to fetch and execute computer-readable instructions or modules stored in the memory 206.

The I/O interface 204 may include a variety of software and hardware interfaces, for example, a web interface, a graphical user interface, and the like. The I/O interface 204 may allow the system 102 to interact with a user directly or through the client devices 104. Further, the I/O interface 204 may enable the system 102 to communicate with other computing devices, such as web servers and external data servers (not shown). The I/O interface 204 can facilitate multiple communications within a wide variety of networks and protocol types, including wired networks, for example, LAN, cable, etc., and wireless networks, such as WLAN, cellular, or satellite. The I/O interface 204 may include one or more ports for connecting a number of devices to one another or to another server.

The memory 206 may include any computer-readable medium or computer program product known in the art including, for example, volatile memory, such as static random access memory (SRAM) and dynamic random access memory (DRAM), and/or nonvolatile memory, such as read only memory (ROM), erasable programmable ROM, flash memories, hard disks, optical disks, a compact disks (CDs), digital versatile disc or digital video disc (DVDs) and magnetic tapes. The memory 206 may include modules 208 and data 224.

The modules 208 include routines, programs, objects, components, data structures, etc., which perform particular tasks or implement particular abstract data types. In one implementation, the modules 208 may include a receiving module 210, a configuring module 212, a creating module 214, an assigning module 216, an allocating module 218, categorizing module 220, and other modules 222. The other modules 222 may include programs or coded instructions that supplement applications and functions of the system 102.

The data 224, amongst other things, serves as a repository for storing data processed, received, and generated by one or more of the modules 208. The data 224 may also include, protocol database 226 and other data 228.

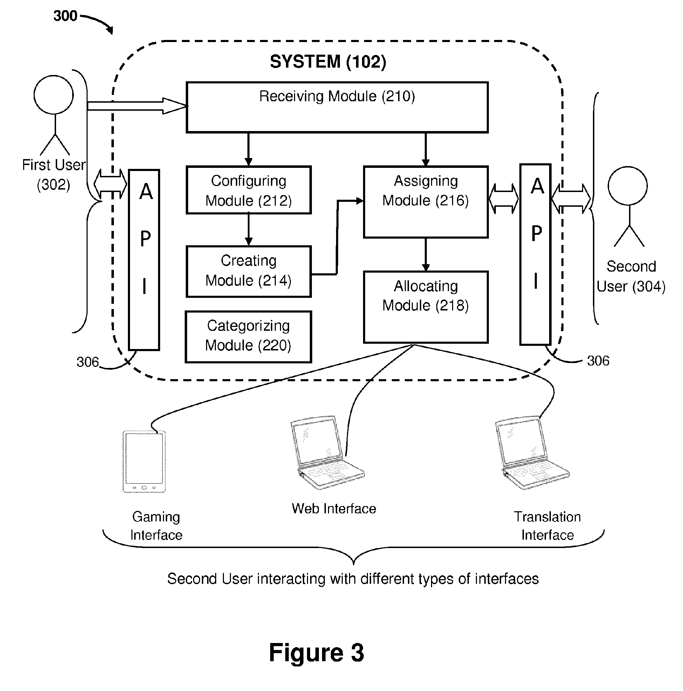

Referring now to Figure 3, illustrates detailed working of the system, in accordance with an embodiment of the present subject matter. The system 102 is provided for allocating the task on the crowd sourcing platform. On the crowd sourcing platform provided, the first user 302 and the second users 304 may register themselves. According to embodiments of present subject matter, the first user 302 and the second user 304 may create their individual account, while registering with the system 102, by providing personal details, language competency, and other demographic information. Further, the system 102 may use an email or captcha based verification techniques for allowing the first user 302 and the second user 304 to interact with the system 102. According to the embodiments, the first user 302 may also be referred as task uploader who uploads the task on the system 102. Similarly, the second user 304 may also be referred as workers or translators employed or registered for performing the task actions upon the task uploaded on the system 102. According to embodiments of present disclosure, the second user 304 may also be a non-registered user who may not be registered with the system 102.

Thus, the receiving module 210 of the system 102 may receive the task from the first user 302. In other words, the receiving module 210 may enable the first user 302 to upload or post the task on the system 102. Further, the configuring module 212 of the system 102 may enable the first user 302 to configure a protocol. The protocol indicates one or more task actions to be performed for completing the task. For example, after uploading the task as a "document", the first user 302 may configure the protocol indicating the task action to be performed i.e., "translation task". Apart from the translation task, there are other types of task actions which may be performed on the task. The other types of task actions may be a voting task for a previously translated task, an editing task for the previously translated task, spelling correction task, and a transliteration task.

Further, the protocol may comprise a Machine-Human-Human-Human protocol, a Machine-Human-Human protocol, and Machine-Human protocol. For example, in the Machine-Human-Human protocol, a phrase (micro-task) is translated by a machine (first task action) who's translation is edited by a human (second task action), and whose translation is edited again by a human (third task action). Thus, it may be observed from the above example that series of task actions may be defined in the protocol. According to the embodiments, the protocol configured by the first user 302 is shown in following format.

$$\{M/H -attr\_nameattr\_val\}, \{M/H -attr\_nameattr\_val\},$$

In the above example, "M/H" stands for Machine/Human which defines whether the micro-task is going to a machine or a human for performing the task action. Similarly "attr" stands for attribute. This may allow the first user 302 to define attributes for the protocol and its values which can be seen below.

$$\{M -tr\ google\}, \{H -id\ 1\}, \{H -id\ 2 -sel\ !(\#1)\}, \{H -id\ 3 -sel\ !(\#1,\#2) -ta\ v\}$$

The above example defines a Machine-Human-Human-Human protocol containing four steps separated by commas. In the first step, the micro task is sent to a Machine and attribute "tr" identifies which is a machine translator. In this step, the micro-task may be sent to Google™ Translate. The second step defines a Human step where the "id" attribute "id 1" is associated with human associated with the second step. The third step is also a Human step with "id 2", but the selector attribute "sel", is used to select humans. The "sel !(#1)" attribute in the third step indicates "not the human used in step with id 1" which means that the human with id 1 used in the second step should not be used in the third step. Further, the fourth step is also a human step with "id 3", specifying that humans used in steps with id 1& id 2 shouldn't be used in the step four, and that the only task action "ta" allowed is to vote "v" (as defined in task action table in action_code field which is explained later in detail).

According to embodiments of present disclosure, the configuring module 212 may also enable the first user 302 to configure a validation protocol which is used for validating the plurality of micro-tasks. For example, the following protocol defines a Machine-Human-Human protocol and the attribute "validator" is used to signal that the final step is the validator step.

$$\{M -tr\ google\}, \{H -id\ 1 -ta\ te\}, \{H -id\ 2 -sel\ !(\#1) -ta\ te -validator\}$$

Based on the above example, the translation received may be considered as a final translation for the micro-tasks. Further, in the next step, the creating module 214 of the system 102 may create a hierarchy comprising a plurality of micro-tasks associated with the task. Further, the hierarchy is created in such a manner that a parent-child relationship may exist between the plurality of micro-tasks. For example, considering the task as a "document", the creating module 214 may create the plurality of micro-tasks containing a page, a paragraph, a sentence, and a phrase associated with the document. The plurality of micro-tasks created may maintain a parent-child relationship. For example, the parent-child relationship may be maintained between the sentence micro-task and its constituent phrase micro-tasks. Similarly, the parent-child relationship may be established for paragraphsentence micro-task and page-paragraph micro-tasks. Further, the plurality of micro-tasks created may be stored in a micro-task table as shown below.

| Micro-task-id | task_id | text | from_lang_code | to_lang_code | parent_id | level |
|---|---|---|---|---|---|---|
| 1 | 1 | Pune is a very vibrant and colourful city, near the Western Ghats. | en | Hin | -1 | 2 |
| 2 | 1 | Pune is | en | Hin | 1 | 1 |
| 3 | 1 | a very vibrant and colourful city | en | Hin | 1 | 1 |
| 4 | 1 | , near the Western Ghats. | en | Hin | 1 | 1 |

From the above table, it may be observed that the micro-task table has a "parent_id" field which defines its parent micro-task. It also has a "level" field which indicates the level of the micro-task in the hierarchy. The lowest level task (e.g. phrase level micro-task) is at level 1.

After creating the micro-task table, the categorizing module 220 of the system 102 may categorize the plurality of micro-tasks by assigning a tag-id to each of the plurality of micro-tasks. The tag-id may be assigned based on a set of predefined content associated with the plurality of micro-tasks. The set of predefined content may comprises name of a person, name of a place, and name of an organization. According to the embodiments, the categorizing module 220 may use named entity recognition (NER) for assigning the tag-ids. Considering the above task i.e., "document", the micro-tasks which talks about the same item or the same location may be categorized together. After assigning the tag-id, a tag table is created as shown below.

| Tag-id | name |
|---|---|
| 1 | Pune |
| 2 | Western Ghats |

From the above table, it may be observed that based on the predefined attribute i.e., "name of the place" (Pune and Western Ghats), the tag-id is assigned. Based on the above two tables, a mapping table may be created in which micro-task ids are mapped with tag-ids as shown below.

| microtask_id | tag_id |
|---|---|
| 1 | 1 |
| 1 | 2 |
| 2 | 1 |
| 3 | NA |
| 4 | 2 |

From the above mapping table, it may be observed that for the micro-task id 1, the tag-ids 1 & 2 both are mapped because the name of location i.e., Pune and Western Ghats both are present in the phrase having the micro-task id 1. Further, for the micro-task id 2, the tag-id mapped is 1. Further, it may be also observed that for the micro-task id 3, no tag-id is mapped because none of the predefined content is present in the phrase having micro-task id 3.

In the next step, the assigning module 216 of the system 102 may assign a task action to each of the plurality of micro-tasks based on the protocol configured. As discussed in the above paragraphs, there may be number of task actions comprising the translation task, the voting task for a previously translated task, the editing task for the previously translated task, the spelling correction task, and the transliteration task which may be assigned to the plurality of micro-tasks based on the protocol configured. Referring back to above example of the "Machine-Human-Human protocol", a phrase (i.e., the micro-task) is translated by a machine (first task action) who's translation is edited by a human (second task action), and whose translation is edited again by a human (third task action). Thus, three task actions may be assigned to the micro-task (phrase). Few of the task actions along with their action_code are shown below in the task action table.

| id | Task action name | action_code |
|----|------------------|-------------|
| 1 | Editing task of previously translated task | te |
| 2 | Voting task of previously translated task | v |

Further, in the next step, the allocating module 218 of the system 102 may allocate each of the plurality of micro-tasks to the second user 304 based on the task action assigned and a set of parameters. The set of parameters may comprise second user's metadata, completion time associated with each micro-task, size of each micro-task, and form factor of an interface accessed by the second user 304. Further, the second user's metadata may comprise personal details, language competency, and other demographic information associated with the second user 304. This parameter is one of a factor which helps the allocating module 218 to target a relevant second user for allocating the micro-task. For example, if the language competency of the second user 304 is good for a language like Hindi, the allocating module 218 may allocate that second user 304 the micro-task which is to be translated into the Hindi language.

Further, the other parameters like completion time associated with each micro-task, size of each micro-task, and form factor of an interface accessed by the second user 304 also plays vital role for allocating the micro-tasks to the second user 304. The different interfaces (as shown in fig. 3) may comprise, but not limited to, a gaming interface, a web interface, and a translation interface running on the device of the second user 304.

Considering an example having a micro-task "phrase" to be allocated for performing the task action as "translation" for translating the micro-task from English to Hindi language. In this example, the allocating module 218 may never select the gaming interface for allocating this micro-task. This is because one of the parameter i.e., the "form factor" of the gaming interface may not be large enough to accommodate the phrase along with its associated paragraph. Further, other parameters like "completion time" and "size" of the micro-task may also be considered by the allocating module 218 before allocating the micro-task. Since the completion time and the size associated with the phrase will be relatively more than a word, the allocating module 218 may avoid allocating such micro-task (phrase) to the gaming interface. Here, the completion time may refer to an effort required by the second user 304 for completing the micro-task. Since, the second user 304 associated with the gaming interface may be busy playing the game and may not prefer for performing task actions like the translation or the editing task.

Thus, the allocating module 218 may allocate this micro-task to the translation interface only rather than allocating it to the gaming interface. On the contrary, if the micro-task is a "phrase" and task action to be performed is "voting task for a previously translated task" instead of translating, the allocating module 218 may allocate this micro-task to the gaming interface or the web interface. This is because, the completion time required for voting is relatively less than the translating or editing the previously translated task. From the above discussion, it may be observed that, the allocating module 218 may also analyzes the intention of the second user 304 interacting with different interfaces in combination with the second user's metadata. Further, each of these interfaces (gaming interface, web interface, and translation interface) is explained in detail in subsequent paragraphs of the specification.

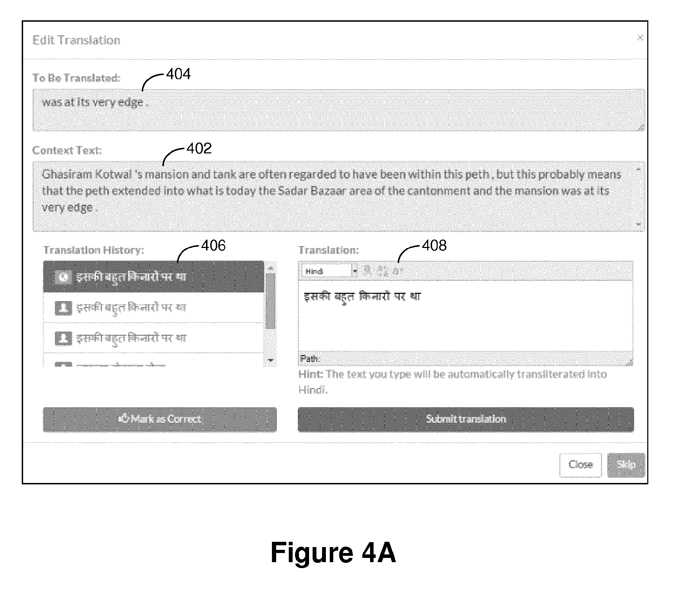

Referring now to Figure 4A-4F, illustrates examples of allocating tasks on the crowdsourcing platform, in accordance with an embodiment of the present subject matter. As explained above, the allocating module 218 may allocate or route the plurality of micro-tasks to an appropriate interface or application running on the device of the second user 304. For example, figure 4A indicates a "translation interface" having a micro-task allocated as "phrase" 404 of a paragraph or a context text 402. While allocating the micro-task (phrase) for translating the phrase from English-to-Hindi or editing the previously translated phrase, the allocating module 218 may analyze the details of the second user 304 interacting with the translation interface on their devices. Along with second user's metadata, the allocating module 218 may also analyze the set of parameters (completion time, size, and form factor) before allocating the micro-task. Since, the micro-task to be allocated is the phrase and the task action to be performed is the translation task or the editing task, the allocating module 218 selects the translation interface amongst the available interfaces for allocating the micro-task.

According to one embodiment, the task action to be performed on this translation interface is "editing task for the previously translated task". The second user 102 may go through the translation history 406 and may select one of the previously translated tasks. Thereafter, the second user 304 may edit the selected previously translated task under the translation window 408. According to another embodiment, the translation interface may also provide the task action "translation task" to be performed for translating the phrase "was at its very edge" 404. In this case, the second user 304 may provide a fresh translation for the phrase in the translation window 408.

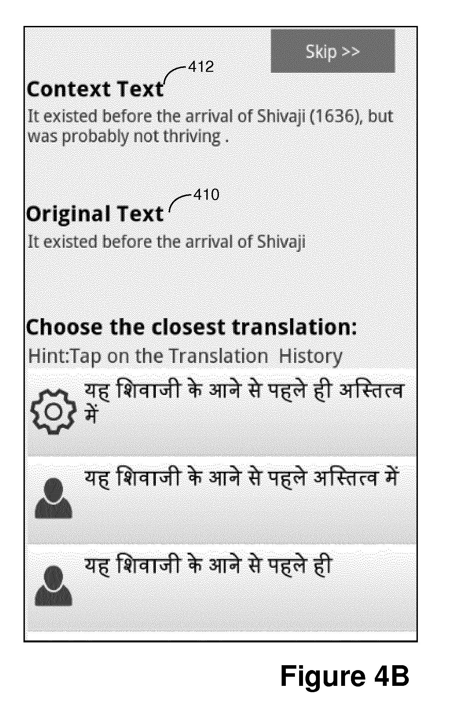

Further, the figure 4B illustrates the web interface having the micro-task allocated as the phrase 410 of a sentence 412. In this example, the task action to be performed is to "choose the best translation" amongst the translations available by the second user. Three different translations for the phrase "It is executed before the arrival of Shivaji" are shown on the web interface. From the available translations, the second user 304 interacting with the web interface may choose the best translation and submit his/her response.

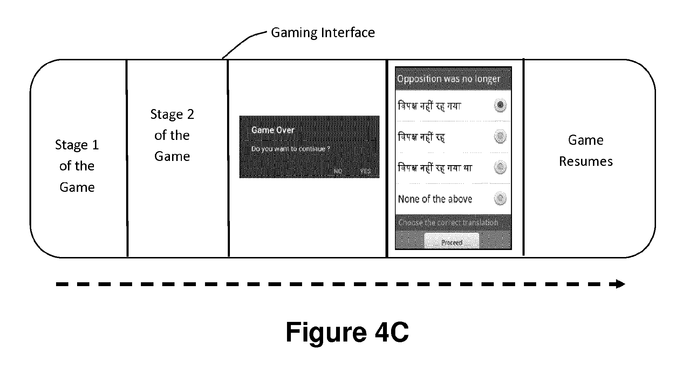

Further, the figure 4C illustrates the gaming interface having the micro-task allocated as the phrase. In this example, the task action to be performed is to "choose the best translation" amongst the translations available for second user's selection. While playing, the second user 304 may end up with the Game after completing only two stages (Stage 1 and Stage 2). In this case, the allocating module 218 may allocate the micro-task "phrase" and displays the available translated options for that phrase. In response, the user may choose one of the translated options of his/her choice from the list. Since, the completion time and the effort required by the required by the second user for choosing the best translated option is relatively less, the allocating module 218 allocates this micro-task to the gaming interface. After the second user selects the any one of available translated options, the gaming interface automatically resumes the game.

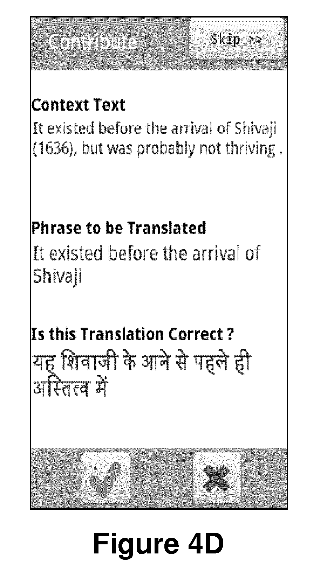

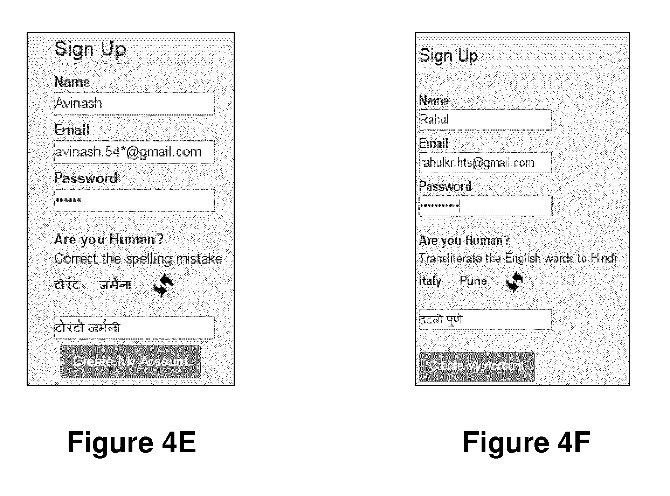

Further, the figure 4D illustrates the web interface having the micro-task allocated as the phrase. In this example, the task action to be performed is "voting task for a previously translated task". Through the web interface provided, the second user may vote for the previously translated phrase by choosing one of the options provided on the web interface. According to embodiments of present disclosure, the task actions may also comprise "spelling correction task" and "transliteration task" as shown in the figure 4E and 4F respectively.

According to embodiments of present disclosure, the second users 304 may request/demand for translating the micro-tasks by specifying their credentials and the language pair. In one embodiment of present subject matter, the system 102 may provide an application programming interface (API) which may help the second users 304 by providing machine assisted translation. The machine assisted translation may comprise source to target language dictionary support, auto-correction of words in target language, transliteration and grammatical hints/syntactic hints.

After receiving, by the receiving module 210, the response from the second user 304 corresponding to the micro-task allocated, the system 102 may store the response in the response table. For example, the translated micro-tasks may be merged to form a single translated task for the first user 302. The translated micro-tasks may be analyzed by the system 102 based upon various translation protocols associated with the micro-tasks. Further, the analysis may include evaluating the translated micro-tasks based on similarity measures in order to obtain the single translated task. In one embodiment, the system 102 may obtain the single translated task using a translation protocol selected by the first user 302. Thus, the first user 302, after the translation tasks are translated and submitted by the second user 304 may be enabled to download the translated tasks from the system 102.

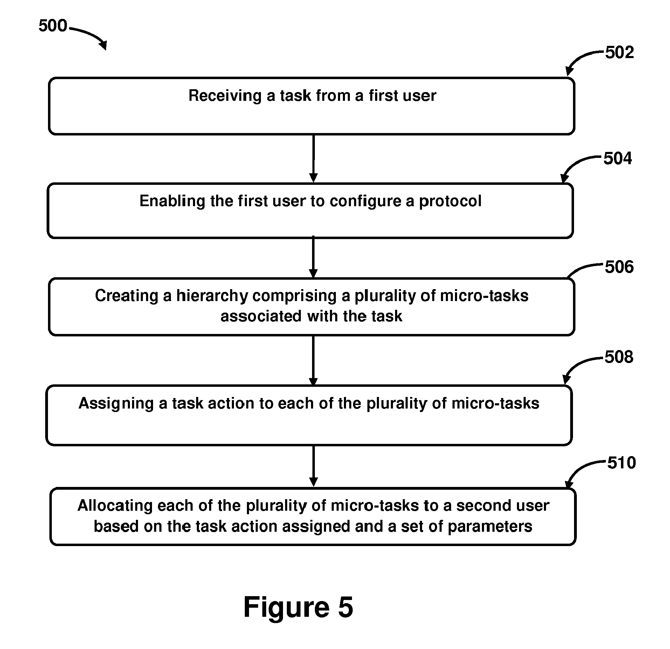

Referring now to Figure 5, a method for allocating a task on a crowd sourcing platform is shown, in accordance with an embodiment of the present subject matter. The method 500 may be described in the general context of computer executable instructions. Generally, computer executable instructions can include routines, programs, objects, components, data structures, procedures, modules, functions, etc., that perform particular functions or implement particular abstract data types. The method 500 may also be practiced in a distributed computing environment where functions are performed by remote processing devices that are linked through a communications network. In a distributed computing environment, computer executable instructions may be located in both local and remote computer storage media, including memory storage devices.

The order in which the method 500 is described is not intended to be construed as a limitation, and any number of the described method blocks can be combined in any order to implement the method 500 or alternate methods. Additionally, individual blocks may be deleted from the method 500 without departing from the spirit and scope of the subject matter described herein. Furthermore, the method 500 can be implemented in any suitable hardware, software, firmware, or combination thereof. However, for ease of explanation, in the embodiments described below, the method 500 may be considered to be implemented in the above described system 102.

At block 502, a task may be received from a first user.

At block 504, the first user may be enabled to configure a protocol indicating one or more task actions to be performed for completing the task.

At block 506, a hierarchy of a plurality of micro-tasks associated with the task may be created.

At block 508, a task action may be assigned to each of the plurality of micro-tasks based on the protocol configured.

At block 510, each of the plurality of micro-tasks may be allocated to a second user based on the task action assigned and a set of parameters. Further, the set of parameters may comprise second user's metadata, completion time associated with each micro-task, size of each micro-task, and form factor of an interface accessed by the second user.

Although implementations for methods and systems for providing task allocation have been described in language specific to structural features and/or methods, it is to be understood that the appended claims are not necessarily limited to the specific features or methods described. Rather, the specific features and methods are disclosed as examples of implementations for task allocation on the crowd sourcing platform.

**Claims**

1. A method for allocating a task on a crowd sourcing platform, the method comprising:

   receiving, by a processor, a task from a first user;
   enabling, by the processor, the first user to configure a protocol, wherein the protocol indicates one or more task actions to be performed for completing the task;
   creating, by the processor, a hierarchy comprising a plurality of micro-tasks associated with the task;
   assigning, by the processor, a task action to each of the plurality of micro-tasks based on the protocol configured; and
   allocating, by the processor, each of the plurality of micro-tasks to a second user based on the task action assigned and a set of parameters, wherein the set of parameters comprises second user's metadata, completion time associated with each micro-task, size of each micro-task, and form factor of an interface accessed by the second user.

2. The method of claim 1, wherein the task action comprises a translation task, voting task for a previously translated task, editing task for the previously translated task, spelling correction task, and transliteration task.

3. The method of claim 1, wherein the protocol comprises a Machine-Human-Human-Human protocol, a Machine-Human-Human protocol, and Machine-Human protocol.

4. The method of claim 1, wherein the interface comprises a gaming interface, a web interface, a translation interface running on a device of the second user.

5. The method of claim 1, further comprising categorizing the plurality of micro-tasks by assigning a tag-id to the plurality of micro-tasks, wherein the tag-id is assigned based on a set of predefined content associated with the plurality of micro-tasks, and wherein the set of predefined content comprises name of a person, name of a place, and name of an organization.

6. The method of claim 1, further comprising receiving response from the second user corresponding to the micro-task allocated, wherein the response received is stored in a response table, and wherein the response table comprises the micro-task, micro-task-id, second user id, a task action id, and the response.

7. A system 102 for allocating a task on a crowd sourcing platform, the system 102 comprises:

   a processor 202;
   a memory 204 coupled to the processor 202, wherein the processor 202 executes a plurality of modules 208 stored in the memory 204, and wherein the plurality of modules 208 comprises:

      a receiving module 210 to receive a task from a first user;
      a configuring module 212 to enable the first user to configure a protocol, wherein the protocol indicates one or more task actions to be performed for completing the task;
      a creating module 214 to create a hierarchy comprising a plurality of micro-tasks associated with the task;
      an assigning module 216 to assign a task action to each of the plurality of micro-tasks based on the protocol configured; and
      an allocating module 218 to allocate each of the plurality of micro-tasks to a second user based on the task action assigned and a set of parameters, wherein the set of parameters comprises second user's metadata, completion time associated with each micro-task, size of each micro-task, and form factor of an interface accessed by the second user.

8. The system 102 of claim 7, further comprising a categorizing module 220 to categorize the plurality of micro-tasks by assigning a tag-id to the plurality of micro-tasks, wherein the tag-id is assigned based on a set of predefined content associated with the plurality of micro-tasks, and wherein the set of predefined content comprises name of a person, name of a place, and name of an organization.

9. The system 102 of claim 7, wherein the receiving module 210 receives a response from the second user corresponding to the micro-task allocated, wherein the response received is stored in a response table, and wherein the response table comprises the micro-task, micro-task-id, second user id, a task action id, and the response.

10. A non-transitory computer readable medium embodying a program executable in a computing device for allocating a task on a crowd sourcing platform, the program comprising:

a program code for receiving a task from a first user;
a program code for enabling the first user to configure a protocol, wherein the protocol indicates one or more task actions to be performed for completing the task;
a program code for creating a hierarchy comprising a plurality of micro-tasks associated with the task;
a program code for assigning a task action to each of the plurality of micro-tasks based on the protocol configured; and
a program code for allocating each of the plurality of micro-tasks to a second user based on the task action assigned and a set of parameters, wherein the set of parameters comprises second user's metadata, completion time associated with each micro-task, size of each micro-task, and form factor of an interface accessed by the second user.

100

SYSTEM (102)

NETWORK

(106)

104 - 1          104 - 2          104 - 3          104 - N

# Figure 1

<u>200</u>

SYSTEM (<u>102</u>)

PROCESSOR(S) (<u>202</u>)　　　　INTERFACE(S) (<u>204</u>)

MEMORY (<u>206</u>)

MODULES (<u>208</u>)

RECEIVING MODULE (<u>210</u>)

CONFIGURING MODULE (<u>212</u>)

CREATING MODULE (<u>214</u>)

ASSIGNING MODULE (<u>216</u>)

ALLOCATING MODULE (<u>218</u>)

CATEGORIZING MODULE (<u>220</u>)

OTHER MODULES (<u>222</u>)

DATA (<u>224</u>)

PROTOCOL DATABASE (<u>226</u>)

OTHER DATA (<u>228</u>)

# Figure 2

Second User interacting with different types of interfaces

**Figure 3**

Figure 4A

Skip >>

Context Text ⌐412

It existed before the arrival of Shivaji (1636), but was probably not thriving .

Original Text ⌐410

It existed before the arrival of Shivaji

Choose the closest translation:

Hint:Tap on the Translation  History

यह शिवाजी के आने से पहले ही अस्तित्व में

यह शिवाजी के आने से पहले अस्तित्व में

यह शिवाजी के आने से पहले ही

Figure 4B

Gaming Interface

Stage 1 of the Game

Stage 2 of the Game

Game Over
Do you want to continue ?
NO    YES

Opposition was no longer

विपक्ष नहीं रह गया

विपक्ष नहीं रह

विपक्ष नहीं रह गया था

None of the above

Choose the correct translation

Proceed

Game Resumes

# Figure 4C

**Figure 4D**

## Figure 4E

## Figure 4F

500

502

Receiving a task from a first user

504

Enabling the first user to configure a protocol

506

Creating a hierarchy comprising a plurality of micro-tasks associated with the task

508

Assigning a task action to each of the plurality of micro-tasks

510

Allocating each of the plurality of micro-tasks to a second user based on the task action assigned and a set of parameters

# Figure 5

Europäisches Patentamt

European Patent Office

Office européen des brevets

## EUROPEAN SEARCH REPORT

Application Number

EP 15 15 4053

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 402 894 A1 (ALCATEL LUCENT [FR]) 4 January 2012 (2012-01-04) * the whole document * ----- | 1-10 | INV. G06Q10/06 |

TECHNICAL FIELDS SEARCHED (IPC)

G06Q

The present search report has been drawn up for all claims

| Place of search | Date of completion of the search | Examiner |
|---|---|---|
| The Hague | 15 June 2015 | Sigolo, Alessandro |

EPO FORM 1503 03.82 (P04C01)

**ANNEX TO THE EUROPEAN SEARCH REPORT
ON EUROPEAN PATENT APPLICATION NO.**                                    EP 15 15 4053

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2015

| Patent document cited in search report | Publication date | Patent family member(s) | Publication date |
|---|---|---|---|
| EP 2402894 A1 | 04-01-2012 | NONE | |

EPO FORM P0459

**REFERENCES CITED IN THE DESCRIPTION**

**Patent documents cited in the description**

- IN 42MUM2014